# FASCICULE DE BREVET EUROPEEN

(11) **EP 1 270 178 B1**
(45) Date de publication et mention de la délivrance du brevet: **10.11.2004**
(21) Numéro de dépôt: 02291584.7
(22) Date de dépôt: 25.06.2002
(51) Int. Cl.: B29C 51/08, B29C 51/04, B29C 51/42, B29C 51/46, B29C 33/30

(54) **Outillage pour le thermoformage d'une bande en matière(s) synthétique(s)**
Thermoformwerkzeug zum formen von Kunststofffolie
Thermoforming tool for forming a plastic film

(30) Priorité: 25.06.2001 FR 0108355
(43) Date de publication de la demande: 02.01.2003
(73) Titulaire: Société technologique de Précision mécanique, 93160 Noisy-le-Grand (FR)
(72) Inventeur: Marcel, Michel, 77410 Villevaude (FR); Marcel, Christophe, 77410 Villevaude (FR)
(74) Mandataire: Domenego, Bertrand

(56) Documents cités:
- EP-A- 0 987 094
- DE-A- 3 508 892
- US-A- 4 533 555
- PATENT ABSTRACTS OF JAPAN vol. 004, no. 161 (M-040), 11 novembre 1980 (1980-11-11) -& JP 55 111222 A (MITSUNORI KOKI KK), 27 août 1980 (1980-08-27)
- PATENT ABSTRACTS OF JAPAN vol. 1997, no. 05, 30 mai 1997 (1997-05-30) -& JP 09 019958 A (MATSUSHITA ELECTRIC IND CO LTD), 21 janvier 1997 (1997-01-21)

## Description

L'invention concerne un outillage de formage thermique ou thermoformage conforme au préambule de la revendication 1, servant lors de la fabrication d'emballages en matière(s) synthétique(s) destinés à emballer des produits divers (liquides, pâteux, solides en granules ou en poudre dont le dosage nécessite un état dit « semi-liquide »), par exemple alimentaires ou cosmétiques, et plus généralement les produits de consommation nécessitant un emballage.

Un outillage conforme au préambule de la revendication 1 est connu par exemple du document JP 09 019958.

Les outillages de formage connus sont « dédiés » à la fabrication d'un produit, et si l'on désire obtenir un produit final de formes quelque peu différentes, l'outillage doit être entièrement remplacé.

L'invention a pour but notamment de remédier à cet inconvénient et également de permettre la fabrication à une cadence relativement élevée d'emballages de faible coût mais présentant néanmoins une bonne résistance.

A cette fin, l'invention concerne un outillage conforme à la revendication 1.

Grâce à cet agencement, on déforme la matière synthétique ou les matières synthétiques en progressant dans la déformation par étapes, ce qui laisse à la matière ou aux matières un temps de repos et de stabilisation entre les phases de déformation. A la sortie des modules où la forme et la température désirées sont atteintes, la bande en matière(s) synthétique(s) est prête à être introduite dans un moule lui conférant la forme et le volume finals désirés. Cet outillage permet le formage de bandes à structure multicouches constituées de couches en matières différentes, aussi bien que de bandes monocouches.

L'outillage peut en outre présenter une ou plusieurs des caractéristiques exposées dans les revendications secondaires 2 à 14.

D'autres caractéristiques et avantages de l'invention ressortiront de la description qui va suivre, d'une forme de réalisation de l'invention illustrée par les dessins joints dans lesquels :
- la figure 1 est une vue schématique de côté partiellement coupée d'un outillage de formage selon l'invention dans une position dans laquelle les modules sont représentés imbriqués de manière à thermoformer une bande (ici monocouche pour simplifier l'exposé) en matière synthétique insérée dans l'outillage,
- la figure 2 est une vue schématique de côté partiellement coupée du même outillage de formage dans une position dans laquelle les modules sont éloignés pour permettre le défilement de la bande, et
- la figure 3 est une vue schématique de dessus du support et des modules de formage inférieurs de l'outillage des figures 1 et 2.

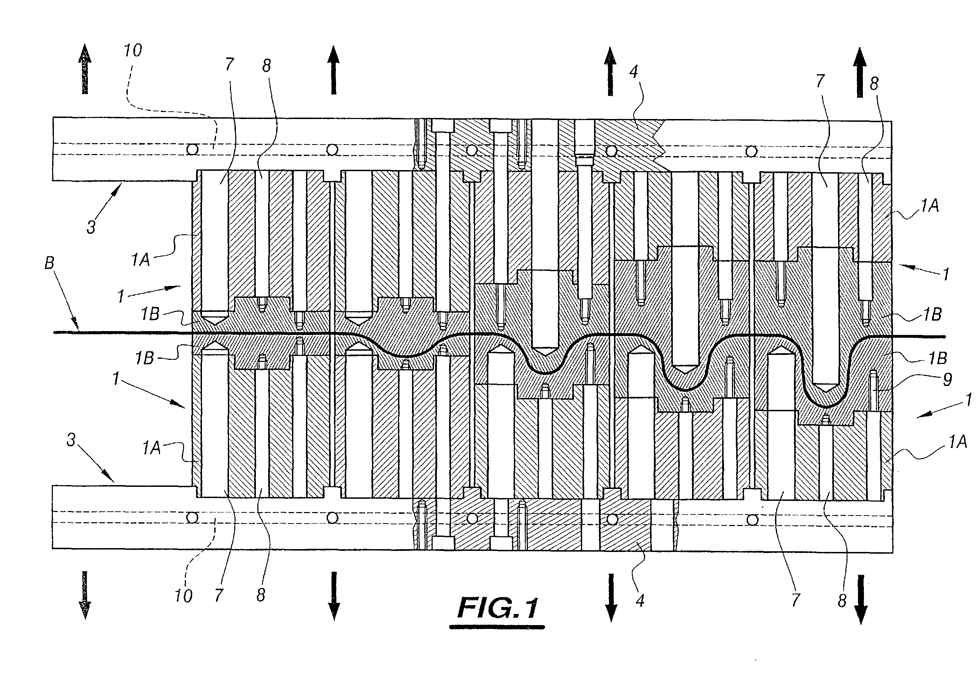

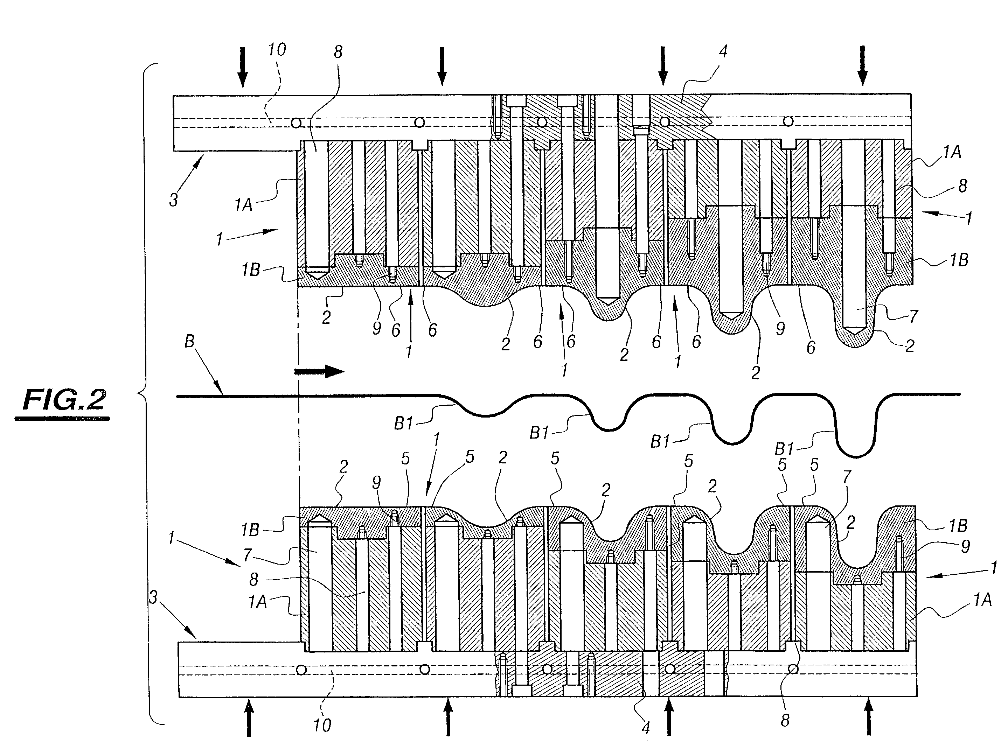

L'outillage de formage représenté sur les figures 1 et 2 est destiné à « former » (c'est à dire en fait à déformer), une bande B ici monocouche en matière synthétique déformable à la chaleur qui est faite défiler pas à pas dans une première direction, par déplacement de matière sous l'action de paires de modules de formage dont les modules présentent en vis à vis des surfaces de formage 2 de formes complémentaires portées à une température appropriée entre lesquelles la région de la bande à former est pincée et comprimée ; la bande B en matière synthétique est entraînée mécaniquement avec un pas constant entre les modules des paires de modules lorsque ceux-ci sont écartés.

Cet outillage de formage thermique comporte deux supports de modules 3 présentant chacun une partie en forme de plaque 4 sur laquelle au moins une série de modules 1 fixés de manière démontable est disposée de telle manière que chaque module d'une plaque ait sa surface de formage en vis-à-vis d'une surface de formage de forme complémentaire d'un module porté par l'autre plaque ; les deux plaques 4 s'étendent parallèlement l'une à l'autre et sont liées mécaniquement à des moyens d'actionnement en translation dans une deuxième direction approximativement orthogonale à la première direction (non représentés), de telle manière que les supports 3, et ainsi les modules de formage 1 de ceux-ci, entre lesquels est disposée la bande, puissent être alternativement actionnés l'un vers l'autre et l'un à distance de l'autre entre une position dans laquelle les surfaces de formage 2 des modules en vis à vis sont imbriquées en laissant entre elles un espace pour la bande de telle manière qu'elles compriment celle-ci lorsqu'elle est insérée entre les surfaces de formage, et une position dans laquelle ils sont suffisamment éloignés les uns des autres pour permettre le défilement pas à pas de la bande entre eux. Ces moyens d'actionnement des supports de modules appartiennent à un système asservi.

Chaque série de modules de formage est constituée de modules 1 se succédant en alignement rectiligne dans la première direction (ou direction longitudinale), et les séries de modules respectives des deux supports 3 disposées en regard ont une amplitude d'imbrication croissante en allant dans le sens de défilement de la bande, de manière à pousser la matière de la bande pour provoquer une déformation progressive de chaque région à former de la bande, et à rassembler la matière par fluage dans un volume suffisant pour parvenir à la forme désirée.

Dans le cas illustré par les figures 1 et 2, correspondant à la fabrication d'emballages creux dont la hauteur est notablement supérieure au diamètre, et où la forme finale en sortie de formage est une forme à paroi latérale tronconique, les modules de l'une des séries présentent une surface de formage en creux (modules femelles) et les modules de l'autre série une surface de formage en saillie (modules mâles) à l'exception des modules d'entrée qui sont plans; en outre, les creux sont de plus en plus profonds, et les saillies de plus en plus hautes, en allant dans le sens de défilement de la bande ; de plus, sur les modules en creux, les surfaces 5 entre les creux ne sont pas toutes exactement au même niveau mais sont légèrement décalées, et sur les modules en saillie, les surfaces 6 entre les saillies ne sont également pas toutes exactement au même niveau mais légèrement décalées de telle manière que les surfaces entre les creux et les surfaces entre les saillies se rapprochent en allant dans le sens de défilement de la bande, afin de produire une diminution de l'épaisseur de la bande entre les régions formées, en allant dans le sens de défilement.

Chaque support 3 de modules peut porter côte à côte plusieurs séries longitudinales de modules 1, chacune de ces séries étant naturellement disposée en vis à vis d'une série longitudinale de modules complémentaires portée par l'autre support, afin de constituer sur la bande B, en sortie d'outillage, plusieurs alignements longitudinaux de régions formées. Les séries de modules portées par un même support s'étendent alors côte à côte parallèlement les unes aux autres de telle manière que les modules soient disposés dans une configuration en matrice dans laquelle, dans la direction perpendiculaire à la direction de défilement de la bande et à la direction d'actionnement des supports 3 (troisième direction, transversale aux plaques 4), les modules d'une même perpendiculaire sont tous identiques.

Comme on l'a vu, le formage est du type formage thermique, et il est donc nécessaire de chauffer les surfaces de formage 2 des modules.

A cette fin, dans la forme de réalisation représentée sur les dessins, chaque module 1 comporte au moins un canal 7 s'étendant dans la deuxième direction, chaque canal 7 servant de logement à une résistance électrique de chauffage (non représentée) susceptible de porter la surface de formage 2 à une température supérieure à 200° C environ.

Ce canal 7, borgne, débouche uniquement du côté de la plaque 4 pour permettre l'alimentation électrique de la résistance; en revanche, à l'opposé, il s'étend jusqu'à une faible distance de la surface de formage, afin de chauffer efficacement celle-ci ; dans les modules présentant une saillie de hauteur notable, il s'étend à l'intérieur de la saillie.

Dans chaque module, un canal 8 parallèle au canal 7 formant logement pour la résistance et similaire à celui-ci mais ici de plus petit diamètre constitue un logement dans lequel est disposée une sonde de repérage de température (non représentée) reliée à un circuit de régulation de la température du module pour piloter ce circuit ; dans les modules présentant un creux, ce canal formant logement pour une sonde est disposé en vis-à-vis du fond du creux, c'est-à-dire est approximativement central dans le module, et il en est de même pour les modules présentant une saillie de faible hauteur et également pour les modules d'entrée, ne présentant ni creux ni saillie.

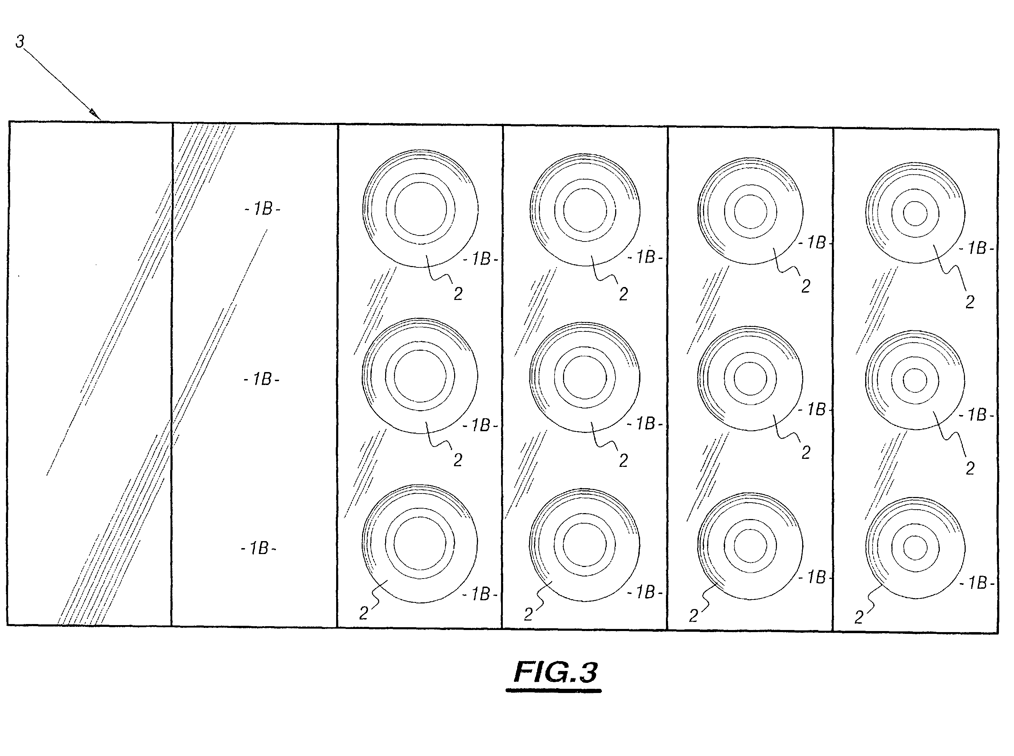

Les modules de formage sont constitués sous la forme de plots en deux parties 1A, 1B superposées sous la forme de pièces distinctes dont l'une 1A constituant la base du module est appliquée contre le support, et l'autre 1B est munie de la surface de formage 2. Lorsque chaque plaque 4 porte plusieurs séries de modules 1 alignés rectilignement dans la direction longitudinale, disposées côte à côte, les parties de base 1A juxtaposées des plots identiques alignés rectilignement dans la direction transversale sont réalisées en une seule pièce sous la forme d'une barrette transversale de base, et les parties de formage 1B juxtaposées de ces plots identiques alignés rectilignement dans la direction transversale sont également réalisées en une seule pièce sous la forme d'une barrette transversale de formage (figure 3). La partie de base 1A de chaque module ou plot ou de plusieurs modules ou plots de chaque barrette présente une cavité, et la partie de formage 1B correspondante présente en regard une protubérance de forme conjuguée, facilitant le positionnement mutuel des deux parties ou des deux barrettes. Les plots sont assemblés par vis (non représentées), et ici chacun comporte à cette fin au moins un canal taraudé 9 s'étendant parallèlement au logement 7 pour la résistance et au logement 8 pour la sonde ; ce canal 9 se prolonge dans la plaque 4 et débouche à l'extérieur de celle-ci par un lamage permettant le logement de la tête de la vis d'assemblage.

Afin d'éviter les échanges thermiques entre les modules de formage 1 chauffés et les supports, une feuille d'isolant thermique (non représentée sur les dessins) est interposée entre chaque plaque 4 et les modules 1 qu'elle porte. En outre, les supports comportent intérieurement un faisceau ou un réseau de canaux 10 de circulation pour un fluide de refroidissement, tel que de l'eau, par exemple des canaux longitudinaux ou/et des canaux transversaux.

Les modules 1 sont en métal, par exemple en aluminium ou en alliage d'aluminium ; pour empêcher la matière synthétique de la bande B de coller sur les surfaces de formage, celles-ci sont munies d'un revêtement anti-adhérent résistant à l'abrasion. Chaque support 3 porte alors deux couches de barrettes en aluminium ou en alliage d'aluminium dont les surfaces de formage sont munies du revêtement anti-adhérent résistant à l'abrasion.

On peut noter que pour le chauffage des surfaces de formage 2, il est possible de prévoir, au lieu de résistances chauffantes logées dans des canaux 7, des résistances chauffantes ou des fils résistants chauffants intégrés dans les modules de formage ou dans les barrettes de modules.

Pour thermoformer des zones destinées à être ensuite moulées, d'une bande en matière synthétique, par exemple une matière thermoplastique, un bord avant de la bande est amené à l'entrée de l'outillage entre les supports 3, c'est-à-dire proximité des paires de modules 1 à surfaces de formage 2 planes ; puis, lorsque les régions de ces zones à former qui sont situées les plus en avant sont entre les modules de ces premières paires de modules, les supports 3 sont rapprochés pour presser la bande au moyen des surfaces de formage des modules de manière à faire fluer de la matière dans les zones de celles-ci qui seront ensuite à étirer perpendiculairement au plan de la bande ; puis les supports sont éloignés l'un de l'autre et la bande 3 est faite progresser vers la sortie de l'outillage, sur une longueur correspondant à une paire de modules, afin que les zones à étirer soient entre les modules des paires de modules suivantes ; les supports 3 sont alors rapprochés, ces zones sont pressées et étirées perpendiculairement au plan de la bande au moyen des surfaces de formage 2 des modules de ces paires de modules de manière à y créer des mamelons B1 tandis que la matière qui entoure les mamelons est déplacée vers ceux-ci et que les régions qui sont entre les modules des paires de modules à surfaces de formage planes sont à leur tour pressées pour faire fluer la matière dans les zones a étirer suivantes ; les supports sont à nouveau éloignés, la bande est faite progresser d'un nouveau pas, et le processus d'étirement est poursuivi sur les mamelons B1 et déclenché sur les zones où la matière a été rassemblée, tandis que le processus de fluage est déclenché sur les zones à étirer lors du pas suivant ; le même processus se poursuit toujours pas à pas. Lorsque les mamelons B1, étirés aux dimensions et à la température désirées, sortent de l'outillage, ils sont soumis à la phase de moulage qui confère à la zone moulée la forme et le volume finals désirés.

Bien que pour simplifier l'exposé, la description précédente se réfère à une bande monocouche, cet outillage permet le formage de bandes ou de feuilles multicouches éventuellement dont les couches sont constituées de matériaux différents, aussi bien que de bandes ou de feuilles monocouches.

## Revendications

1. Outillage de formage thermique pour former une bande (B) en matière(s) synthétique(s) déformable(s) à la chaleur qui est actionnée pour défiler pas à pas le long d'une première direction, **caractérisé en ce qu'**il comporte, disposées en regard, au moins une première et au moins une deuxième séries de modules de formage (1) démontables, fixées chacune en alignement le long d'un support (3) de modules respectif s'étendant dans la direction de défilement, les modules (1) sont constitués par des plots adaptés pour être chauffés et qui sont associés par paires comportant chacune un plot fixé à l'un des supports et un plot fixé à l'autre support disposés en regard et présentant en vis-à-vis des surfaces de formage (2) de formes complémentaires adaptées pour s'imbriquer en définissant entre elles un espace correspondant à une épaisseur de la bande, les supports (3) sont liés à des moyens d'actionnement en translation dans une deuxième direction approximativement orthogonale à la direction de défilement adaptés pour actionner les supports alternativement l'un vers l'autre et l'un à distance de l'autre entre une position où les modules (1) sont imbriqués audit espace près pour former la bande (B) et une position où ils sont éloignés à une distance permettant le défilement de la bande entre eux, et l'amplitude de l'imbrication des modules en position d'imbrication augmente en allant dans le sens de défilement de la bande.

2. Outillage selon la revendication 1, où des modules (1) portés par l'un des supports (3) présentent une surface de formage (2) en creux, et des modules (1) portés par l'autre support (3) présentent une surface de formage (2) en saillie.

3. Outillage selon l'une quelconque des revendications 1 et 2, où chaque support comporte plusieurs séries de modules (1) s'étendant côte à côte, chacune étant disposée en vis-à-vis d'une série de modules (1) complémentaires portée par l'autre support (3).

4. Outillage selon l'une quelconque des revendications 1 à 3, où les modules (1) sont constitués en deux parties (1A,1B) appartenant à des pièces distinctes, dont l'une constituant la base du module est appliquée contre le support (3) et l'autre est munie de la surface de formage (2).

5. Outillage selon l'une quelconque des revendications 1 à 4, où chaque support (3) porte plusieurs séries de modules (1) s'étendant côte à côte de telle manière que les modules sont disposés dans une configuration en matrice dans laquelle, dans la direction transversale à la direction de défilement, les modules (1) d'une même transversale sont tous identiques.

6. Outillage selon l'une quelconque des revendications 1 à 5, où chaque support (3) porte plusieurs séries de modules (1) s'étendant côte à côte de telle manière que les modules sont disposés dans une configuration en matrice dans laquelle, dans la direction transversale à la direction de défilement, les modules (1) d'une même transversale sont réalisés sous la forme de deux barrettes superposées, à savoir une barrette transversale constituée en une seule pièce des parties de base (1A) de tous les modules appliquées contre le support et une barrette transversale constituée en une seule pièce des parties de formage (1B) de tous les modules munies de la surface de formage (2) de ceux-ci.

7. Outillage selon l'une quelconque des revendications 1 à 6, où les surfaces de formage (2) sont munies d'un revêtement anti-adhérent résistant à l'abrasion.

8. Outillage selon l'une quelconque des revendications 1 à 7, où une feuille d'isolant thermique est interposée entre chaque support (3) et les modules (1) qu'il porte.

9. Outillage selon l'une quelconque des revendications 1 à 8, où les supports (3) comportent intérieurement des canaux (10) de circulation pour un fluide de refroidissement.

10. Outillage selon l'une quelconque des revendications 1 à 9, où les modules (1) comportent au moins un logement (7) dans lequel est disposée une résistance chauffante.

11. Outillage selon l'une quelconque des revendications 1 à 10, où dans les modules (1), sont intégrés des résistances chauffantes ou des fils résistants chauffants.

12. Outillage selon l'une quelconque des revendications 1 à 11, où les modules (1) comportent au moins un logement (8) dans lequel est disposée une sonde de repérage de température.

13. Outillage selon la revendication 12, où la sonde est reliée à un circuit de régulation de la température du module (1).

14. Outillage selon l'une quelconque des revendications 1 à 13, où les supports sont liés à des moyens d'actionnement en translation asservis.

## Claims

1. Thermal forming tooling for forming strips (B) of synthetic deformable material (s) using heat, which is operated so that it advances in a stepwise manner along a initial direction, **characterised by** the fact that it includes, arranged face to face, at least one initial and at least one second series of removable forming modules (1), each fixed in an alignment along a respective module support (3) extending in the direction of advancement. The modules (1) are made up of studs which may be heated and which are arranged in pairs, each pair of which is comprised of a stud fixed to one support and a stud fixed to the other support, arranged facing each other and presenting, facing each other, forming surfaces (2) of complementary shapes which are adapted to over lap and fit into each other whilst defining between them a space corresponding to the thickness of the strip. The supports (3) are connected to a means of translation movement operating in a second direction which is approximately orthogonal to the direction of advance, and which is adapted to operate the supports alternatively towards each other and away from each other, between a position where the modules (1) overlap to fit one into the other in the aforementioned space in order to form the strip (B), and a position where they are away from each other to allow the strip to advance between them. The overlap amplitude of the modules in the fitted position increases whilst moving in the direction of advance of the strip,

2. Tooling as described in claim 1 where modules (1) borne on the support (3) present a hollowed forming surface (2), and where modules (1) borne by the other support (3) present a protruding forming surface (2).

3. Tooling as described in any of claims 1 and 2 whatsoever, where each support is made up of several series of modules (1) extending side by side, with each being equipped facing each other, with a series of complementary modules (1) borne by the other support (3)

4. Tooling as described in any of claims 1 to 3, where the modules (1) are made up of two parts (1A, 1B) belonging to distinct components, with the one making up the base of the module being applied against the support (3) and the other equipped with the forming surface (2).

5. Tooling as described in any of claims 1 to 4 whatsoever, where each support (3) bears several series of modules (1) which extend side by side in such a manner that the modules are arranged in a matrix configuration, in which, in the direction transverse to the direction of advance, the modules (1) in the same transversal are all identical.

6. Tooling as described in any of claims 1 to 5 whatsoever, where each support (3) bears several series of modules (1) which extend side by side in such a manner that the modules are arranged in a matrix configuration in which, in the direction which is transverse to the direction of advance, the modules (1) of the same transversal are made in the form of two superimposed bars, namely a transverse bar making up a single part of all the lower parts (1A) of all the modules applied against the support, and a transverse bar making up a single part of the forming parts (1B) of all modules fitted with the forming surfaces (2) for these.

7. Tooling as described in any of claims 1 to 6 whatsoever, where forming surfaces (2) are equipped with an anti-adhesion abrasion resistance coating

8. Tooling as described in any of the claims 1 to 7 whatsoever where a thermal insulating sheet is placed between each support (3) and the modules (1) that it carries.

9. Tooling as described in any of the claims 1 to 8 whatsoever where the interior of the supports (3) is made up of circulation channels (1) for a cooling fluid.

10. Tooling as described in any of claims 1 to 9 whatsoever, where the modules (1) are made up of at least one housing (7) in which a heating element is fitted.

11. Tooling as described in any of claims 1 to 10 whatsoever, where heating elements or heating element wires are integrated in the modules.

12. Tooling as described in any of the claims 1 to 11 whatsoever, where the modules include at least one housing (8) in which a temperature reading probe is fitted.

13. Tooling as described in claim 12 where the probe is connected to a temperature regulation circuit for the module (1)

14. Tooling as described in any of claims 1 to 13 whatsoever, where the supports are linked to servo-operated translation movement systems.

## Patentansprüche

1. Thermoformwerkzeug zum Formen eines Bandes (B) aus wärmeverformbarem(n) Kunststoff(en), das angetrieben wird, um schrittweise entlang einer ersten Richtung abzulaufen, **dadurch gekennzeichnet, dass** es einander gegenüberliegend angeordnet zumindest eine erste und zumindest eine zweite Reihe abmontierbare Formmodule (1) aufweist, die jeweils in Axialität entlang eines jeweiligen Modulträgers (3) befestigt sind, welcher sich in der Ablaufrichtung erstreckt, wobei die Module (1) von Stiften gebildet sind, welche dafür eingerichtet sind erhitzt zu werden, und welche paarweise zugeordnet sind mit jeweils einem Stift, der an dem einen der Träger befestigt ist und einem Stift, der an dem anderen Träger befestigt ist, wobei sie einander gegenüberliegend angeordnet sind und einander gegenüberliegende Formflächen (2) mit komplementären Formen aufweisen, die dafür eingerichtet sind sich ineinander zu verschachteln, wobei sie zwischen sich einen Raum definieren, der einer Dicke des Bandes entspricht, wobei die Träger (3) mit Antriebsvorrichtungen in Translation in einer zweiten, ungefähr senkrecht zu der Ablaufrichtung verlaufenden Richtung verbunden sind, welche dafür eingerichtet sind, die Träger abwechselnd miteinander und in Abstand zueinander zwischen einer Position zu bewegen, in welcher die Module (1) so verschachtelt sind, dass sie den Raum bilden, um das Band (B) zu formen, und einer Position, in welcher sie voneinander mit einem Abstand beabstandet angeordnet sind, der das Ablaufen des Bandes zwischen ihnen zulässt, und wobei die Stärke der Verschachtelung der Module in der Verschachtelungsposition in der Ablaufrichtung des Bandes gesehen zunimmt.

2. Werkzeug gemäß Anspruch 1, wobei die von dem einen der Träger (3) getragenen Module eine ausgehöhlte Formfläche (2) aufweisen und die von dem anderen Träger (3) getragenen Module (1) eine vorspringende Formfläche (2) aufweisen.

3. Werkzeug gemäß irgendeinem der Ansprüche 1 und 2, wobei jeder Träger mehrere Modulreihen (1) aufweist, die sich nebeneinander erstrecken, und die jeweils einer von dem anderen Träger (3) getragenen komplementären Modulreihe (1) gegenüberliegend angeordnet sind.

4. Werkzeug gemäß irgendeinem der Ansprüche 1 bis 3, wobei die Module (1) aus zwei Bereichen (1A, 1B) bestehen, die zu unterschiedlichen Teilen gehören, wovon das eine, welches die Basis des Moduls bildet, an dem Träger (3) befestigt ist und das andere mit der Formfläche (2) versehen ist.

5. Werkzeug gemäß irgendeinem der Ansprüche 1 bis 4, wobei jeder Träger (3) mehrere Modulreihen (1) trägt, die sich nebeneinander derart erstrecken, dass die Module in einer Matrixkonfiguration angeordnet sind, in welcher in der zu der Ablaufrichtung liegenden Querrichtung die Module (1) einer gleichen Querreihe alle identisch ausgebildet sind.

6. Werkzeug gemäß irgendeinem der Ansprüche 1 bis 5, wobei jeder Träger (3) mehrere Modulreihen (1) trägt, die sich nebeneinander derart erstrecken, dass die Module in einer Matrixkonfiguration angeordnet sind, in welcher in der zu der Ablaufrichtung liegenden Querrichtung die Module (1) einer gleichen Querreihe in Form von zwei übereinander angeordneten Leisten ausgebildet sind, nämlich einer Querleiste, die in einem einzigen Stück aus den Basisbereichen (1A) aller an dem Träger befestigten Module besteht, und einer Querleiste, die in einem einzigen Stück aus den Formbereichen (1B) aller mit ihrer Formfläche (2) versehenen Module besteht.

7. Werkzeug gemäß irgendeinem der Ansprüche 1 bis 6, wobei die Formflächen (2) mit einer abrasionsfesten, nicht haftenden Beschichtung versehen sind.

8. Werkzeug gemäß irgendeinem der Ansprüche 1 bis 7, wobei eine Wärme isolierende Folie zwischen jedem Träger (3) und den Modulen (1), die er trägt, angeordnet ist.

9. Werkzeug gemäß irgendeinem der Ansprüche 1 bis 8, wobei die Träger (3) im Inneren Zirkulationskanäle (10) für eine Kühlflüssigkeit aufweisen.

10. Werkzeug gemäß irgendeinem der Ansprüche 1 bis 9, wobei die Module (1) zumindest eine Aufnahme (7) aufweisen, in welcher ein Heizwiderstand angeordnet ist.

11. Werkzeug gemäß irgendeinem der Ansprüche 1 bis 10, wobei in den Modulen (1) Heizwiderstände oder Heizwiderstandsdrähte integriert sind.

12. Werkzeug gemäß irgendeinem der Ansprüche 1 bis 11, wobei die Module (1) zumindest eine Aufnahme (8) aufweisen, in welcher ein Temperaturfühler angeordnet ist.

13. Werkzeug gemäß Anspruch 12, wobei die Sonde mit einem Regelkreis für die Temperatur des Moduls (1) verbunden ist.

14. Werkzeug gemäß irgendeinem der Ansprüche 1 bis 13, wobei die Träger mit geregelten Antriebsvorrichtungen in Translation verbunden sind.
